# EUROPEAN PATENT SPECIFICATION

(11) **EP 3 689 636 B1**
(45) Date of publication and mention of the grant of the patent: **10.02.2021**
(21) Application number: 19206621.5
(22) Date of filing: 31.10.2019
(51) Int. Cl.: B60C 1/00, C09D 115/00, C08K 5/37, C08K 5/14

(54) **REACTIVE SOLVENT-FREE ADHESIVE COMPOSITION AND METHOD OF MANUFACTURING TIRE USING SAME**
REAKTIVE LÖSUNGSMITTELFREIE KLEBSTOFFZUSAMMENSETZUNG UND VERFAHREN ZUR HERSTELLUNG EINES REIFENS DAMIT
COMPOSITION ADHÉSIVE RÉACTIVE SANS SOLVANT ET PROCÉDÉ DE FABRICATION D'UN PNEU L'UTILISANT

(30) Priority: 01.02.2019 KR 20190013411
(43) Date of publication of application: 05.08.2020
(73) Proprietor: HANKOOK TIRE & TECHNOLOGY CO., LTD, Gangnam-gu Seoul 06133 (KR)
(72) Inventor: Choi, Seokju, 34127 Daejeon (KR); Lee, Daeil, 55343 Jeollabuk-do (KR)
(74) Representative: Petraz, Gilberto Luigi

(56) References cited:
- WO-A1-2018/028365
- US-A1- 2014 187 697

## Description

### BACKGROUND OF THE INVENTION

### 1. Field of the invention

The present disclosure relates to a reactive solvent-free adhesive composition and a method of manufacturing a tire using the same, and more specifically, to a reactive solvent-free adhesive composition for chemical bonding of a non-polar vulcanized rubber and a polar polyurethane material and a method of manufacturing a tire using the same.

### 2. Description of related art

Vulcanized rubber is generally rubber which realizes elasticity by introducing a network structure into a polymer system obtained from a diene monomer using sulfur. The vulcanized rubber has widely been used as material for various tires, rollers, shoe soles, automobile parts and others since the vulcanized rubber is excellent in elasticity, durability and economic efficiency.

Since it is limited to satisfy required performance with a single material of the vulcanized rubber when using such a vulcanized rubber in manufacturing of various products such as automobile parts, tires, shoes, etc., it is necessary to composite the vulcanized rubber together with other material parts, and bonding using adhesive is required in this case.

Raw materials of the vulcanized rubber are raw materials such as natural rubber, styrene-butadiene copolymer rubber, butadiene rubber, acrylonitrile-butadiene copolymer, etc. most of which have low polarity values or non-polar characteristics.

Meanwhile, materials complementing disadvantages of the vulcanized rubber are frequently high polarity materials including polyurethane. There is a problem that it is difficult to realize required performance when using a general adhesive using surface physical bonding to bond such materials with the vulcanized rubber.

### SUMMARY OF THE INVENTION

An objective of the present disclosure is to provide a reactive solvent-free adhesive composition enabling parts in which non-polar elastomers such as vulcanized rubber and polar elastomers such as polyurethane are bonded to consistently maintain adhesive force even under severe conditions.

The other objective of the present disclosure is to provide a method of manufacturing a tire in which a tread for a vulcanized rubber tire and rubber of a polyurethane material are chemically bonded using the adhesive composition.

In order to accomplish the objectives, a reactive solvent-free adhesive composition according to an aspect of the present disclosure comprises: a polybutadiene polyol; a compound having a thiol group; and a radical initiator.

Herein, the reactive solvent-free adhesive composition may comprise 90 to 95 parts by weight of the polybutadiene polyol, 5 to 10 parts by weight of the compound having a thiol group, and 0.1 to 5 parts by weight of the radical initiator.

Further, the polybutadiene polyol may be any one selected from the group consisting of cis-1,4-polybutadiene polyol, trans-1,4-polybutadiene polyol, 1,2-polybutadiene polyol, and hydroxyl-terminated polybutadiene, or mixtures of two or more thereof.

In addition, the compound having a thiol group may be an aliphatic thiol compound or an aromatic thiol compound.

Further, the radical initiator may be any one selected from the group consisting of a photoinitiator, a peroxide initiator, and an azo compound, or mixtures of two or more thereof.

On the other hand, a method of manufacturing a tire according to the other aspect of the present disclosure comprises: a step (S1) of applying an adhesive composition to the surface of a vulcanized rubber for tire tread; a step (S2) of forming a polyurethane prepolymer on the adhesive composition; and a step (S3) of heating a resulting product of the step (S2), wherein the adhesive composition is the aforementioned reactive solvent-free adhesive composition according to the present disclosure.

An adhesive composition according to the present disclosure enables realization of high adhesive force through chemical bonding in an interface between a vulcanized rubber and polyurethane by comprising a polybutadiene polyol capable of being chemically bonded with a non-polar vulcanized rubber and a thiol compound capable of participating in the formation of a polar polyurethane material.

Further, an adhesive composition according to the present disclosure is environmentally friendly since the adhesive composition according to the present disclosure does not comprise an organic solvent differently from conventional adhesive compositions.

### [Description of Drawings]

FIG. 1 is a drawing illustrating that a polybutadiene polyol (hydroxyl terminated polybutadiene, HTPB) and a compound (HS-CH₂CH₂OH) having a thiol group according to an embodiment of the present disclosure are subjected to a thiol-ene click reaction by a radical initiator.

FIG. 2 is a drawing illustrating a reaction of forming polyurethane by a chemical reaction between a thiol group of a thiol compound and a polyurethane prepolymer according to an embodiment of the present disclosure.

FIG. 3 is a drawing illustrating a reaction of forming polyurethane by a chemical reaction between a hydroxyl group-containing compound and the polyurethane prepolymer according to an embodiment of the present disclosure.

### DETAILED DESCRIPTION OF THE INVENTION

Hereinafter, the present disclosure will be described in more detail.

A reactive solvent-free adhesive composition according to an aspect of the present disclosure comprises: a polybutadiene polyol; a compound having a thiol group; and a radical initiator.

The polybutadiene polyol can be chemically bonded to a non-polar vulcanized rubber. First, the polybutadiene polyol, as an oligomer obtained by polymerizing butadiene, is well applied to an adherend surface and wets the vulcanized rubber well by having excellent affinity with respect to a vulcanized rubber. Further, the polybutadiene polyol enables a remaining double bond to be chemically bonded to a double bond of the vulcanized rubber even after the polybutadiene polyol has been formed into an oligomer. Further, hydroxyl groups introduced into the polybutadiene polyol may have reactivity capable of being participated in the formation of a polar elastic material such as polyurethane to be adhered to the vulcanized rubber. Such multiple reactivities enable realization of high adhesive force due to chemical bonding between adherend surfaces.

Meanwhile, the polybutadiene polyol additionally includes a compound having a thiol group in the present disclosure since it is difficult to use the polybutadiene polyol alone due to high viscosity at room temperature although the polybutadiene polyol generally has a weight average molecular weight of 10,000 g/mol or less.

The compound having a thiol group can participate in the formation of a polar elastic material such as polyurethane as well as reaction with the polybutadiene polyol. Such a compound having a thiol group can form a double bond and a covalent bond through a so-called thiol-ene click reaction, has reactivity capable of participating even in the formation of a polyurethane material, has low viscosity, and exhibits compatibility with the polybutadiene polyol.

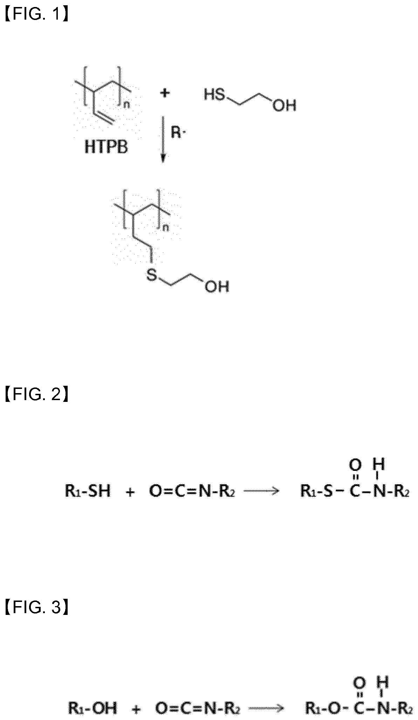

FIG. 1 illustrates that a polybutadiene polyol (hydroxyl terminated polybutadiene, HTPB) and a compound (HS-CH₂CH₂OH) having a thiol group are subjected to a thiol-ene click reaction by a radical initiator. Radical initiators are needed in order for such a thiol-ene click reaction to be occurred.

FIG. 2 is a drawing illustrating a reaction of forming polyurethane by a chemical reaction between a thiol compound and a polyurethane prepolymer, and FIG. 3 is a drawing illustrating a reaction of forming polyurethane by a chemical reaction between a hydroxyl group-containing compound and the polyurethane prepolymer. Strong adhesive force can be realized since a chemical reaction occurs in an interface coupled to a polar polyurethane prepolymer through reactions such as those of FIG. 2 and FIG. 3.

At this time, the reactive solvent-free adhesive composition may comprise 90 to 95 parts by weight of the polybutadiene polyol, 5 to 10 parts by weight of the compound having a thiol group, and 0.1 to 5 parts by weight of the radical initiator.

The reactive solvent-free adhesive composition may have a problem due to phase separation between the polybutadiene polyol and the compound having the thiol group when the reactive solvent-free adhesive composition comprises less than 90 parts by weight of the polybutadiene polyol and more than 10 parts by weight of the compound having the thiol group, while the reactive solvent-free adhesive composition may exhibit low adhesive strength when the reactive solvent-free adhesive composition comprises more than 95 parts by weight of the polybutadiene polyol and less than 5 parts by weight of the compound having the thiol group.

Further, a smooth reaction may not be generated in the reactive solvent-free adhesive composition due to shortfall of an initiator content when the reactive solvent-free adhesive composition comprises less than 0.1 part by weight of the radical initiator, while proper adhesive application may be impossible due to too fast reaction when the reactive solvent-free adhesive composition comprises more than 5 parts by weight of the radical initiator.

On the other hand, the polybutadiene polyol for preparing a reactive solvent-free adhesive composition according to the present disclosure may include any one selected from the group consisting of cis-1,4-polybutadiene polyol, trans-1,4-polybutadiene polyol, 1,2-polybutadiene polyol, and hydroxyl-terminated polybutadiene, or mixtures of two or more thereof.

In addition, the compound having the thiol group may be an aliphatic thiol compound or an aromatic thiol compound.

More specifically, nonlimiting examples of the thiol compound may include: aliphatic thiol compounds such as 1,3-propanedithiol, 1,4-butanedithiol, 1,5-pentanedithiol, 1,6-hexanedithiol, 1,7-heptanedithiol, 1,8-octanedithiol, 2-mercaptoethanol, aminoethanethiol, 2-(butylamino)ethanethiol, 3-(methylthio)propylamine, trimethylolpropane tris(3-mercaptopropionate), pentaerythritol tetrakis(3-mercaptopropionate), tetraethylene glycol bis(3-mercaptopropionate), dipentaerythritol hexakis(3-mercaptopropionate), pentaerythritol tetrakis(thioglycolate), tris[(3-mercaptopropionyloxy)-ethyl]-isocyanurate, 1,4-bis(3-mercaptobutyryloxy)butane, 1,3,5-tris(3-mercaptobutyloxyethyl)-1,3,5-triazine-2,4,6(1H,3H,5H)-trion, pentaerythritol tetrakis(3-mercaptobutylate), 2,2'-(ethylenedioxy)diethanethiol, etc.; and aromatic thiol compounds, etc. Preferably, the nonlimiting examples of the thiol compound may be low molecular weight thiol compounds having a weight average molecular weight of about 500 g/mol or less.

Further, the radical initiator may be any one selected from the group consisting of a photoinitiator activated by ultraviolet rays, a peroxide initiator using decomposition accomplished by heating, and an azo compound, or mixtures of two or more thereof.

The photoinitiator may include benzoin ether (e.g., benzoin methyl ether or benzoin butyl ether), an acetophenone derivative (e.g., 2,2-dimethoxy-2-phenylacetophenone or 2,2-diethoxyacetophenone), 1-hydroxycyclohexyl phenyl ketone, an acylphosphine oxide derivative, and an acylphosphonate derivative (e.g., bis(2,4,6-trimethylbenzoyl)phenylphosphine oxide, diphenyl(2,4,6-trimethylbenzoyl)phosphine oxide, isopropoxyphenyl-2,4,6-trimethylbenzoylphosphine oxide, or dimethyl pivaloylphosphonate).

Further, the peroxide initiator may include hydroperoxide (e.g., cumene, tert-butyl hydroperoxide or tert-amyl hydroperoxide), dialkyl peroxide (e.g., di-tert-butyl peroxide, dicumyl peroxide or cyclohexyl peroxide), peroxyester (e.g., tert-butyl perbenzoate, tert-butyl peroxy-2-ethylhexanoate, tert-butyl peroxy-3,5,5-trimethylhexanoate, tert-butyl monoperoxymaleate, or di-tert-butyl peroxyphthalate), and diacyl peroxide (e.g., benzoyl peroxide or lauryl peroxide).

Further, the peroxide initiator may include peroxycarbonate (e.g., tert-butylperoxy 2-ethylhexyl carbonate, tert-butylperoxy isopropyl carbonate, or di(4-tert-butylcyclohexyl)peroxydicarbonate) and ketone peroxides (e.g., methyl ethyl ketone peroxide, 1,1-di(tert-butylperoxy)cyclohexane, 1,1-di(tert-butylperoxy)-3,3,5-trimethylcyclohexane, and cyclohexanone peroxide).

Further, for example, the azo compound may include 2,2'-azobisisobutyronitrile, 2,2'-azobis(2-methylbutyronitrile), 2,2'-azobis[2-methyl-N-(2-hydroxyethyl)propionamide], 1,1'-azobis(1-cyclohexanecarbonitrile), 2,2'-azobis(2,4-dimethylvaleronitrile), 2,2'-azobis-(N,N'-dimethyleneisobutyramidine) dihydrochloride and 2,2'-azobis(2-amidinopropane) dihydrochloride, and organic or inorganic peroxides such as diacetyl peroxide, di-tert-butyl peroxide, diamyl peroxide, dioctanoyl peroxide, dodecanoyl peroxide, dilauroyl peroxide, benzoyl peroxide, bis(o-toluoyl) peroxide, succinyl peroxide, tert-butyl peracetate, tert-butyl permaleate, tert-butyl perisobutyrate, tert-butyl perpivalate, tert-butyl peroctoate, tert-butyl perneodecanoate, tert-butyl perbenzoate, tert-butyl peroxide, tert-butyl hydroperoxide, cumene hydroperoxide, tert-butyl peroxy-2-ethylhexanoate, and diisopropyl peroxydicarbamate.

Such a radical initiator may be generally used in an amount of 0.1 to 5 wt% based on the total amount of a monomer, more preferably in an amount of 0.1 to 3 wt% based on the total amount of the monomer.

On the other hand, a method of manufacturing a tire according to the other aspect of the present disclosure comprises: a step (S1) of applying an adhesive composition to the surface of a vulcanized rubber for tire tread; a step (S2) of forming a polyurethane prepolymer on the adhesive composition; and a step (S3) of heating a resulting product of the step (S2), wherein the adhesive composition is the aforementioned reactive solvent-free adhesive composition according to the present disclosure.

According to the method, adhesive force between the two materials can be perfectly realized by performing chemical bonding between the vulcanized rubber for tire tread and the polyurethane prepolymer.

At this time, the method of manufacturing the tire comprises performing a heat treatment process at 110 °Cfor 30 minutes such that a thiol-ene click reaction can be proceeded by an adhesive composition after the step (S1) and before the step (S2).

Further, the step (S3) may be performed at 110 °C for 12 hours to cure polyurethane.

Meanwhile, a raw rubber of a vulcanized rubber for tire tread according to the present disclosure may be any one selected from the group consisting of a natural rubber, a synthetic rubber, and a combination thereof.

The natural rubber may be a general natural rubber or a modified natural rubber.

The general natural rubber may include any rubbers which have been known as a natural rubber without limiting place of origin or the like thereof. The natural rubber includes cis-1,4-polyisoprene as a main body, but may include trans-1,4-polyisoprene according to required characteristics. Therefore, the natural rubber may also include a natural rubber including trans-1,4-isoprene as a main body, e.g., balata or the like, i.e., a type of South American Sapotaceae rubber besides the natural rubber including cis-1,4-polyisoprene as a main body.

The modified natural rubber means a natural rubber obtained by modifying or purifying the general natural rubber. For example, the modified natural rubber may include an epoxidized natural rubber (ENR), a deproteinized natural rubber (DPNR), a hydrogenated natural runner, etc.

Further, the synthetic rubber may be any one selected from the group consisting of styrene butadiene rubber (SBR), modified styrene butadiene rubber, butadiene rubber (BR), modified butadiene rubber, acrylonitrile butadiene rubber, and combinations thereof.

It may be desirable in effect aspects of improving abrasion resistant performance and fuel efficiency performance of a tire according to use of raw rubber that the raw rubber among these materials includes a mixture of styrene butadiene rubber (SBR) and butadiene rubber (BR).

Further, a reinforcing filler may include carbon black, silica, or a mixture thereof.

On the other hand, a vulcanized rubber composition for the tire tread may further comprise optionally additional various additives including a vulcanizing agent, a vulcanization accelerator, a vulcanization acceleration aid, an antiaging agent, a softener, a retarder, an adhesive, etc. The various additives may include any additives which are generally used in the art to which the present disclosure pertains, and amounts of the additives are in accordance with a mixing ratio used in a general rubber composition for tire tread. Therefore, the amounts of the additives are not particularly limited.

The vulcanizing agent may preferably include a sulfur-based vulcanizing agent. The sulfur-based vulcanizing agent may include an inorganic vulcanizing agent such as sulfur (S) powder, insoluble sulfur (S), precipitated sulfur (S), colloidal sulfur, etc. Specifically, the sulfur-based vulcanizing agent may include a vulcanizing agent for producing element sulfur or sulfur, e.g., amine disulfide, polymer sulfur, etc.

The vulcanizing agent is preferably included in an amount of 0.5 to 4.0 parts by weight with respect to 100 parts by weight of the raw rubber in that the vulcanizing agent makes the raw rubber less sensitive to heat and allows the raw rubber to be chemically stable as appropriate vulcanizing effects.

The vulcanization accelerator means an accelerator which accelerates vulcanization rate or accelerates delayed action in an initial vulcanization step.

The vulcanization accelerator may include any one selected from the group consisting of a sulfenamide-based vulcanization accelerator, a thiazole-based vulcanization accelerator, a thiuram-based vulcanization accelerator, a thiourea-based vulcanization accelerator, a guanidine-based vulcanization accelerator, a dithiocarbamic acid-based vulcanization accelerator, an aldehyde-amine based vulcanization accelerator, an aldehyde-ammonia based vulcanization accelerator, an imidazoline-based vulcanization accelerator, a xanthate-based vulcanization accelerator, and combinations thereof.

For example, the sulfenamide-based vulcanization accelerator may include any one sulfenamide-based compound selected from the group consisting of N-cyclohexyl-2-benzothiazolesulfenamide (CBS), N-tert-butyl-2-benzothiazolesulfenamide (TBBS), N,N-dicyclohexyl-2-benzothiazolesulfenamide, N-oxydiethylene-2-benzothiazolesulfenamide, N,N-diisopropyl-2-benzothiazolesulfenamide, and combinations thereof.

For example, the thiazole-based vulcanization accelerator may include any one thiazole-based compound selected from the group consisting of 2-mercaptobenzothiazole (MBT), dibenzothiazole disulfide (MBTS), a sodium salt of 2-mercaptobenzothiazole, a zinc salt of 2-mercaptobenzothiazole, a copper salt of 2-mercaptobenzothiazole, a cyclohexylamine salt of 2-mercaptobenzothiazole, 2-(2,4-dinitrophenyl)mercaptobenzothiazole, 2-(2,6-diethyl-4-morpholinothio)benzothiazole, and combinations thereof.

For example, the thiuram-based vulcanization accelerator may include any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and combinations thereof.

For example, the thiourea-based vulcanization accelerator may include any one thiourea-based compound selected from the group consisting of thiocarbamide, diethylthiourea, dibutylthiourea, trimethylthiourea, Di-o-tolylthiourea, and combinations thereof.

For example, the guanidine-based vulcanization accelerator may include any one guanidine-based compound selected from the group consisting of diphenylguanidine, Di-o-tolylguanidine, triphenylguanidine, o-Tolylbiguanide, diphenylguanidine phthalate, and combinations thereof.

For example, the dithiocarbamic acid-based vulcanization accelerator may include any one dithiocarbamic acid-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, cadmium diamyldithiocarbamate, and combinations thereof.

For example, the aldehyde-amine based or aldehyde-ammonia based vulcanization accelerator may include an aldehyde-amine based or aldehyde-ammonia based compound selected from the group consisting of an acetaldehyde-aniline reactant, a butylaldehyde-aniline condensate, hexamethylenetetramine, an acetaldehyde-ammonia reactant, and combinations thereof.

For example, the imidazoline-based vulcanization accelerator may include imidazoline-based compounds such as 2-mercaptoimidazoline, etc., and the xanthate-based vulcanization accelerator may include xanthate-based compounds such as zinc dibutylxanthate, etc.

The vulcanization accelerator may be included in an amount of 0.5 to 4.0 parts by weight with respect to 100 parts by weight of the raw rubber to maximize improvements in productivity and rubber physical properties through acceleration of vulcanization rate.

Meanwhile, the vulcanization acceleration aid, as a compounding agent which is used in a combination with the vulcanization accelerator to complete its acceleration effect, may include any one selected from the group consisting of an inorganic vulcanization acceleration aid, an organic vulcanization acceleration aid, and a combination thereof.

The inorganic vulcanization acceleration aid may include any one selected from the group consisting of zinc oxide (ZnO), zinc carbonate, magnesium oxide (MgO), lead oxide, potassium hydroxide, and combinations thereof. The organic vulcanization acceleration aid may include any one selected from the group consisting of stearic acid, zinc stearate, palmitic acid, linoleic acid, oleic acid, lauric acid, dibutyl ammonium oleate, derivatives thereof, and combinations thereof.

Particularly, the zinc oxide and the stearic acid may be used together as the vulcanization acceleration aid. In this case, a crosslinking reaction of rubber is facilitated by dissolving the lead oxide in the stearic acid, thereby producing sulfur favorable to a vulcanization reaction by forming an effective complex with the vulcanization accelerator.

The zinc oxide and the stearic acid may respectively be used in amounts of 1 to 5 parts by weight and 0.5 to 3 parts by weight with respect to 100 parts by weight of the raw rubber in order to perform an appropriate role as the vulcanization acceleration aid when the zinc oxide and the stearic acid are used together. Productivity may be deteriorated since vulcanization rate is slow when the zinc oxide and the stearic acid are used in amounts less than the ranges, while physical properties may be lowered since a scorch phenomenon occurs when the zinc oxide and the stearic acid are used in amounts more than the ranges.

Meanwhile, the antiaging agent is an additive which is used to stop a chain reaction in which a tire is automatically oxidized by oxygen. The antiaging agent may include any one appropriately selected from the group consisting of an amine-based antiaging agent, a phenolic antiaging agent, a quinoline-based antiaging agent, an imidazole-based antiaging agent, a carbamate metal salt, wax, and combinations thereof.

The amine-based antiaging agent may include any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and combinations thereof. The phenolic antiaging agent may include any one selected from the group consisting of 2,2'-methylene-bis(4-methyl-6-tert-butylphenol), 2,2'-isobutylidene-bis(4,6-dimethylphenol), 2,6-di-t-butyl-p-cresol, and combinations thereof. The quinoline-based antiaging agent may include 2,2,4-trimethyl-1,2-dihydroquinoline and derivatives thereof, specifically any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof. The wax preferably includes waxy hydrocarbons.

Further, the antiaging agent may be included in an amount of 1 to 10 parts by weight with respect to 100 parts by weight of the raw rubber considering conditions that the antiaging agent should have a high solubility for rubber besides an antiaging effect, should have a low volatility, should be inactive to rubber, and should not hinder vulcanization.

On the other hand, the softener which is added to the rubber composition to facilitate processing or lower hardness of vulcanized rubber by giving plasticity to rubber means other oil materials used during rubber mixing or rubber manufacturing. The softener means oils included in process oil or other rubber compositions. Although the softener may include any one selected from the group consisting of a petroleum-based oil, a vegetable oil, and a combination thereof, the present disclosure is not limited thereto.

The petroleum-based oil may include any one selected from the group consisting of a paraffin-based oil, a naphthene-based oil, an aromatic oil, and combinations thereof.

Typical examples of the paraffin-based oil may include P-1, P-2, P-3, P-4, P-5, P-6, etc. of Michang Oil Industry Co., Ltd., typical examples of the naphthene-based oil may include N-1, N-2, N-3, etc. of Michang Oil Industry Co., Ltd., and typical examples of the aromatic oil may include A-2, A-3, etc. of Michang Oil Industry Co., Ltd.

However, since a cancer-causing possibility has been known to be high when polycyclic aromatic hydrocarbons (hereinafter, referred to as 'PAHs') included in the aromatic oil have a content of 3 wt% or more along with a recent upsurge of environmental consciousness, the aromatic oil may preferably include a treated distillate aromatic extract (TDAE) oil, a mild extraction solvate (MES) oil, a residual aromatic extract (RAE) oil, or a heavy naphthenic oil.

Particularly, the oil used as the softener may preferably be TDAE oil in which components of PAHs are included in a total amount of 3 wt% or less with respect to the total oil weight, which has a kinematic viscosity of 95 or more (210 °F SUS), and which comprises 15 to 25 wt% of an aromatic component, 27 to 37 wt% of a naphthenic component, and 38 to 58 wt% of a paraffinic component in the softener.

The TDAE oil has characteristics advantageous even to environmental factors such as a cancer-causing possibility of PAHs while enabling a tire tread including the TDAE oil to maintain excellent low temperature characteristics and fuel efficiency performance.

The vegetable oil may include any one selected from the group consisting of castor oil, cottonseed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, Macadamia Nut Oil, Carthamus Tinctorius (Safflower) Seed Oil, Chinese wood oil, and combinations thereof.

The softener is preferably included in an amount of 0 to 20 parts by weight with respect to 100 parts by weight of the raw rubber in that the softener improves processability of the raw rubber.

Meanwhile, the retarder may include any one selected from the group consisting of phthalate anhydride, salicylic acid, sodium acetate, N-cyclohexyl thiophthalimide, and combinations thereof. The retarder may be included in an amount of 0.1 to 0.5 part by weight with respect to 100 parts by weight of the raw rubber.

Further, the adhesive contributes to improvement in physical properties of the rubber composition by further improving tack performance between rubbers and improving mixability, dispersibility and processability of other additives including a filler.

The adhesive may include a natural resin-based adhesive such as a rosin-based resin or a terpene-based resin, and a synthetic resin-based adhesive such as petroleum resin, coal tar, alkyl phenolic resin, etc.

The rosin-based resin may be any one selected from the group consisting of a rosin resin, a rosin ester resin, a hydrogen-added rosin ester resin, derivatives thereof, and combinations thereof. The terpene-based resin may be any one selected from the group consisting of a terpene resin, a terpene phenol resin, and a combination thereof.

The petroleum resin may be any one selected from the group consisting of an aliphatic resin, an acid-modified aliphatic resin, an alicyclic resin, a hydrogen-added alicyclic resin, an aromatic (C₉) resin, a hydrogen-added aromatic resin, a C₅-C₉ copolymer resin, a styrene resin, a styrene copolymer resin, and combinations thereof.

The coal tar may be coumarone-indene resin.

The alkyl phenolic resin may be p-tert-alkylphenol formaldehyde resin or resorcinol formaldehyde resin, and the p-tert-alkylphenol formaldehyde resin may be any one selected from the group consisting of p-tert-butylphenol formaldehyde resin, p-tert-octyl phenol formaldehyde resin, and a combination thereof.

The adhesive may be included in an amount of 2 to 4 parts by weight with respect to 100 parts by weight of the raw rubber. Adhesion performance of the rubber may become disadvantageous when the adhesive is included in an amount of less than 2 parts by weight with respect to 100 parts by weight of the raw rubber, while physical properties of the rubber may be deteriorated when the adhesive is included in an amount of more than 4 parts by weight with respect to 100 parts by weight of the raw rubber.

On the other hand, the tire according to the present disclosure may be a tire for a passenger vehicle, a tire for a racing car, an aircraft tire, a tire for an agricultural machine, a tire for off-the-road driving, a truck tire, a bus tire, or the like. Further, the tire may be a radial tire or a bias tire.

Hereinafter, Examples of the present disclosure will be described in detail so that the present disclosure can be easily practiced by those skilled in the art to which the present disclosure pertains. However, the present disclosure can be implemented in various different forms and is not limited to the Examples described herein.

### [Preparation Example: Preparation of adhesive compositions]

Adhesive compositions were prepared by the same compositions as represented in the following Table 1. The following adhesive compositions do not comprise an organic solvent.

**[Table 1]**

| Composition | | Example 1 | Example 2 | Example 3 | Example 4 |
|---|---|---|---|---|---|
| Polybutadiene polyol (Weight average molecular weight: 2,800 g/mol) | | 95 | 92.5 | 95 | 90 |
| Compound having a thiol group | 2-mercaptoethanol | 5 | 7.5 | - | - |
| | 2,2-(ethylenedioxy)diethanethiol | - | - | 5 | 10 |
| Tert-butyl perbenzoate | | 2 | 2 | 2 | 2 |

| | | | | | |
|---|---|---|---|---|---|
| (Unit: weight ratio) | | | | | |

### [Experimental Example: Measurement of adhesive force]

Adhesive force values typical vulcanized synthetic rubbers used as materials for tire tread and polyurethane elastomers having a Shore A harness level of 95 were measured to measure adhesive force values according to adhesive compositions prepared in the Examples.

First, after applying adhesive compositions having the above-mentioned compositions to the vulcanized synthetic rubbers in an amount of 0.001 g/in², the adhesive compositions applied to the vulcanized synthetic rubbers were heat-treated at 110 °C for 30 minutes such that the vulcanized rubbers were sufficiently dipped in the adhesive compositions, and a thiol-ene click reaction was carried out.

Subsequently, after applying a mixture of 1,4-butadiene and an ether-based polyurethane polymer having an isocyanate content of 8.5 wt% to the heat-treated adhesive compositions applied to the vulcanized synthetic rubbers, maintaining the mixture applied to the heat-treated adhesive compositions at 110 °C for 12 hours to cure the same, and measuring adhesive force values between polyurethane and the vulcanized rubbers, the measured adhesive force values are represented in the following Table 2.

**[Table 2]**

| | Example 1 | Example 2 | Example 3 | Example 4 |
|---|---|---|---|---|
| T-peel adhesive force (kgf/cm) between polyurethane and vulcanized rubbers | 11.72 | 12.06 | 11.87 | 13.21 |

As can be confirmed in Table 2, it can be confirmed that high adhesive force values can be realized by an adhesive composition according to the present disclosure, and particularly bonding is perfectly made in the interface by seeing that breakage occurs in the vulcanized rubbers without an interface being broken when evaluating adhesive force values.

## Claims

1. A reactive solvent-free adhesive composition comprising:
a polybutadiene polyol;
a compound having a thiol group; and
a radical initiator.

2. The reactive solvent-free adhesive composition of claim 1, comprising 90 to 95 parts by weight of the polybutadiene polyol, 5 to 10 parts by weight of the compound having a thiol group, and 0.1 to 5 parts by weight of the radical initiator.

3. The reactive solvent-free adhesive composition of claim 1, wherein the polybutadiene polyol is any one selected from the group consisting of cis-1,4-polybutadiene polyol, trans-1,4-polybutadiene polyol, 1,2-polybutadiene polyol, and hydroxyl-terminated polybutadiene, or mixtures of two or more thereof.

4. The reactive solvent-free adhesive composition of claim 1, wherein the compound having a thiol group is an aliphatic thiol compound or an aromatic thiol compound.

5. The reactive solvent-free adhesive composition of claim 1, wherein the radical initiator is any one selected from the group consisting of a photoinitiator, a peroxide initiator, and an azo compound, or mixtures of two or more thereof.

6. A method of manufacturing a tire, the method comprising:
a step (S1) of applying an adhesive composition to the surface of a vulcanized rubber for tire tread;
a step (S2) of forming a polyurethane prepolymer on the adhesive composition; and
a step (S3) of heating a resulting product of the step (S2), wherein the adhesive composition is a reactive solvent-free adhesive composition of any one of claims 1 to 5.

## Patentansprüche

1. Reaktive lösungsmittelfreie Klebstoffzusammensetzung, umfassend:
ein Polybutadienpolyol;
eine Verbindung, die eine Thiolgruppe aufweist; und
einen radikalen Initiator.

2. Reaktive lösungsmittelfreie Klebstoffzusammensetzung nach Anspruch 1, umfassend 90 bis 95 Gewichtsanteile vom Polybutadienpolyol, 5 bis 10 Gewichtsanteile der Verbindung, die eine Thiolgruppe aufweist, und 0,1 bis 5 Gewichtsanteile des radikalen Initiators.

3. Reaktive lösungsmittelfreie Klebstoffzusammensetzung nach Anspruch 1, worin das Polybutadienpolyol irgendeines ist, das aus der Gruppe bestehend aus Cis-1,4-Polybutadienpolyol, Trans-1,4-Polybutadienpolyol, 1,2-Polybutadienpolyol und hydroxylterminiertem Polybutadien oder Mischungen aus zwei oder mehreren derselben ausgewählt ist.

4. Reaktive lösungsmittelfreie Klebstoffzusammensetzung nach Anspruch 1, worin die Verbindung, die eine Thiolgruppe aufweist, eine aliphatische Thiolverbindung oder eine aromatische Thiolverbindung ist.

5. Reaktive lösungsmittelfreie Klebstoffzusammensetzung nach Anspruch 1, worin der radikale Initiator irgendeiner ist, der aus der Gruppe bestehend aus einem Photoinitiator, einem Peroxidinitiator und einer Azoverbindung oder Mischungen aus zwei oder mehreren derselben ausgewählt ist.

6. Verfahren zur Herstellung eines Reifens, wobei das Verfahren umfasst:
einen Schritt (S1) des Auftragens einer Klebstoffzusammensetzung auf die Fläche eines vulkanisierten Gummis für ein Reifenprofil;
einen Schritt (S2) des Ausbildens eines Polyurethanprepolymers auf der Klebstoffzusammensetzung; und
einen Schritt (S3) des Erwärmens eines resultierenden Produktes des Schritts (S2), worin die Klebstoffzusammensetzung eine reaktive lösungsmittelfreie Klebstoffzusammensetzung nach einem der Ansprüche 1 bis 5 ist.

## Revendications

1. Une composition adhésive réactive sans solvant comprenant :
un polybutadiène polyol ;
un composé ayant un groupe thiol ; et
un initiateur radicalaire.

2. Composition adhésive réactive sans solvant selon la revendication 1, comprenant 90 à 95 parties en poids du polybutadiène polyol, 5 à 10 parties en poids du composé ayant un groupe thiol, et 0,1 à 5 parties en poids de l'initiateur radicalaire.

3. Composition adhésive réactive sans solvant selon la revendication 1, dans laquelle le polybutadiène polyol est l'un quelconque choisi dans le groupe constitué par le cis-1,4-polybutadiène polyol, le trans-1,4-polybutadiène polyol, le 1,2-polybutadiène polyol et le polybutadiène à terminaison hydroxyle, ou des mélanges de deux ou plusieurs de ceux-ci.

4. Composition adhésive réactive sans solvant selon la revendication 1, dans laquelle le composé ayant un groupe thiol est un composé thiol aliphatique ou un composé thiol aromatique.

5. Composition adhésive réactive sans solvant selon la revendication 1, dans laquelle l'initiateur radicalaire est l'un quelconque choisi dans le groupe constitué par un photoinitiateur, un initiateur peroxyde et un composé azoïque, ou des mélanges de deux ou plusieurs d'entre eux.

6. Procédé de fabrication d'un pneu, le procédé comprenant :
une étape (S1) d'application d'une composition adhésive à la surface d'un caoutchouc vulcanisé pour bande de roulement de pneu ;
une étape (S2) de formation d'un prépolymère de polyuréthane sur la composition adhésive ; et
une étape (S3) de chauffage d'un produit résultant de l'étape (S2), dans laquelle la composition adhésive est une composition adhésive réactive sans solvant selon l'une quelconque des revendications 1 à 5.
